# EUROPÄISCHE PATENTSCHRIFT

(11) **EP 4 432 582 B1**
(45) Veröffentlichungstag und Bekanntmachung des Hinweises auf die Patenterteilung: **27.08.2025**
(21) Anmeldenummer: 24156762.7
(22) Anmeldetag: 09.02.2024
(51) Int. Cl.: H04B 10/112, H04B 10/114, H04B 10/116

(54) **OPTISCHE EMPFANGSEINHEIT**
OPTICAL RECEIVING UNIT
UNITÉ DE RÉCEPTION OPTIQUE

(30) Priorität: 14.03.2023 DE 102023106269
(43) Veröffentlichungstag der Anmeldung: 18.09.2024
(73) Patentinhaber: SICK AG, 79183 Waldkirch (DE)
(72) Erfinder: Reiner, Gernot, 79211 Denzlingen (DE); Marra, Martin, 79280 Au (DE)
(74) Vertreter: Manitz Finsterwald Patent- und Rechtsanwaltspartnerschaft mbB

(56) Entgegenhaltungen:
- WO-A1-2022/074582
- WO-A1-2022/096402
- WO-A1-2022/214445
- US-A1- 2015 156 568

## Beschreibung

Die vorliegende Erfindung betrifft eine optische Empfangseinheit mit einer Detektoreinheit zum Erfassen optischer Strahlung, einer elektronischen Steuer- und Auswertungseinheit, die mit der Detektoreinheit in Verbindung steht und dazu ausgebildet ist, basierend auf der von der Detektoreinheit erfassten Strahlung wenigstens ein Empfangssignal zu erzeugen, und einer Sammeloptik, die eine Eintrittsfläche definiert und dazu ausgebildet und angeordnet ist, auf die Eintrittsfläche auftreffende optische Strahlung in Richtung der Detektoreinheit zu fokussieren.

Optische Empfangseinheiten werden in verschiedenen Vorrichtungen dazu eingesetzt, Lichtsignale auszuwerten. Häufig ist einer optischen Empfangseinheit eine optische Sendeeinheit zugeordnet, welche die optische Strahlung in Richtung der Detektoreinheit aussendet. Beispielsweise werden optische Empfangseinheiten in Lichtschranken und optischen Datenübertragungsstrecken verwendet.

Die Detektoreinheit weist hinsichtlich der auszuwertenden Strahlungsleistung einen begrenzten Arbeitsbereich auf. Das bedeutet, dass die auf die Eintrittsfläche der Sammeloptik auftreffende Lichtleistung innerhalb eines vorgegebenen Bereichs liegen muss, damit einerseits eine zuverlässige Erfassung stattfindet und andererseits Übersteuerungen vermieden werden. Bei bestimmten Anwendungen sind die Anforderungen an die Signaldynamik so hoch, dass sie von gängigen Detektoreinheiten nicht zu bewältigen sind. Dies gilt beispielsweise bei Sender-Empfänger-Systemen, bei welchen Sender und Empfänger je nach Anwendung nahe beieinander oder in großer Entfernung voneinander zu montieren sind bzw. bei welchen der Sender oder der Empfänger auf einer mobilen Einheit montiert ist.

Eine hochempfindliche Detektoreinheit kann bei geringer Entfernung vom Sender übersteuert oder sogar zerstört werden.

Um den Arbeitsbereich der Detektoreinheit zu erweitern, können dämpfende Elemente, wie zum Beispiel Filter, selektiv in den Strahlengang bewegt werden. Hierfür sind allerdings kostspielige und fehleranfällige Stellglieder erforderlich.

Die WO 2022/074582 A1 offenbart ein optisches Modem für einen Unterwasserbetrieb, das zur Erweiterung der Dynamik mit mehreren Fotodetektoren versehen ist. Ein Multiplexer wählt je nach Lichtintensität den passenden Empfangskanal aus und nimmt die entsprechende Verschaltung vor.

In der WO 2022/096402 A1 ist eine optische Kommunikationseinrichtung offenbart, die mehrere Sender oder Empfänger sowie diesen zugeordnete Linsensegmente aufweist.

Die US 2015/156568 A1 offenbart eine optische Datenübertragungs-Einrichtung, die ein Array von Kommunikationseinheiten sowie eine Linsenanordnung für eine selektive Beaufschlagung der Kommunikationseinheiten aufweist.

Es ist eine Aufgabe der Erfindung, bei einer optischen Empfangseinheit der eingangs genannten Art mit einfachen und zuverlässigen Mitteln den Arbeitsbereich der Detektoreinheit zu vergrößern.

Die Lösung der Aufgabe erfolgt durch eine optische Empfangseinheit mit den Merkmalen des Anspruchs 1.

Erfindungsgemäß umfasst die Detektoreinheit wenigstens zwei separate Strahlungssensoren und die Eintrittsfläche der Sammeloptik weist wenigstens zwei separate Zonen auf, wobei jede der separaten Zonen dazu ausgebildet ist, die auf sie auftreffende optische Strahlung lediglich in Richtung eines der separaten Strahlungssensoren zu fokussieren.

Eine erfindungsgemäße optische Empfangseinheit ist also in der Lage, auf zwei verschiedene Arten optische Strahlung zu erfassen: einmal über eine erste Zone der Sammeloptik und einen zugehörigen ersten Strahlungssensor und einmal über eine separate zweite Zone und einen zugehörigen zweiten Strahlungssensor. Jeder dieser Empfangspfade kann an einen bestimmten Leistungsbereich angepasst sein. Ein besonderer Vorteil der Erfindung besteht darin, dass keine beweglichen Teile und keine elektromechanischen Stellglieder zur Erweiterung des Arbeitsbereichs erforderlich sind.

Bei Bedarf kann die Detektoreinheit auch mehr als zwei separate Strahlungssensoren umfassen, denen jeweilige separate Zonen der Eintrittsfläche der Sammeloptik zugeordnet sind.

Die Sammeloptik kann dazu ausgebildet und angeordnet sein, voneinander beabstandete und/oder zueinander verkippte konvergierende Strahlenbündel zu erzeugen. Insbesondere können die von den separaten Zonen erzeugten Strahlenbündel voneinander beabstandete und/oder zueinander verkippte optische Achsen aufweisen.

Erfindungsgemäß ist vorgesehen, dass die separaten Zonen der Eintrittsfläche unterschiedlich groß sind. Die große Zone sammelt mehr Licht als die kleinere Zone und kann deshalb einem Strahlungssensor zugeordnet sein, der bei geringer Sendelichtleistung zum Einsatz kommt. Bei einer Anwendung mit hoher eingehender Lichtleistung, also zum Beispiel bei nahem Lichtsender, kann dagegen der Strahlungsempfänger verwendet werden, dem die kleinere Zone zugeordnet ist.

Die separaten Strahlungssensoren der Detektoreinheit können unterschiedliche Strahlungs-Empfindlichkeiten aufweisen. Somit gibt es sowohl für den Fall hoher Lichtleistung als auch für den Fall geringer Lichtleistung einen passenden Strahlungssensor. Dem Strahlungssensor mit der höchsten Strahlungs-Empfindlichkeit kann hierbei die größte Zone der Eintrittsfläche zugeordnet sein. Falls wenig Eingangsstrahlung vorhanden ist, kann somit viel Licht gesammelt und mit hoher Empfindlichkeit ausgewertet werden.

Gemäß einer weiteren Ausführungsform der Erfindung ist die Steuer- und Auswertungseinheit dazu ausgebildet, in Abhängigkeit von der auf die Eintrittsfläche auftreffenden Strahlungsintensität entweder nur das Ausgangssignal eines der separaten Strahlungssensoren oder Ausgangssignale aller separaten Strahlungssensoren auszuwerten. Die auf die Eintrittsfläche auftreffende Strahlungsintensität kann hierbei durch die separaten Strahlungssensoren selbst oder durch einen zusätzlichen Sensor überwacht werden. Dadurch kann die optische Empfangseinheit an die tatsächlich vorhandene Eingangslichtleistung angepasst werden. Falls die Detektoreinheit mehr als zwei separate Strahlungssensoren umfasst, können in Abhängigkeit von der Strahlungsintensität entweder nur das Ausgangssignal eines der separaten Strahlungssensoren, Ausgangssignale von wenigstens zwei, aber weniger als der Gesamtzahl der separaten Strahlungssensoren, oder Ausgangssignale aller separaten Strahlungssensoren ausgewertet werden.

Die Steuer- und Auswertungseinheit ist erfindungsgemäß dazu ausgebildet, einen der separaten Strahlungssensoren teilweise oder vollständig zu deaktivieren, wenn die auf die Eintrittsfläche auftreffende Strahlungsintensität einen oberen Schwellwert überschreitet oder einen unteren Schwellwert unterschreitet. Auf diese Weise ist sichergestellt, dass keiner der separaten Strahlungssensoren außerhalb seines zulässigen Arbeitsbereichs betrieben wird.

Weiterhin kann die Steuer- und Auswertungseinheit dazu ausgebildet sein, nur einen der separaten Strahlungssensoren teilweise oder vollständig zu deaktivieren, wenn die auf die Eintrittsfläche auftreffende Strahlungsintensität einen oberen Schwellwert überschreitet und nur den anderen der separaten Strahlungssensoren teilweise oder vollständig zu deaktivieren, wenn die auf die Eintrittsfläche auftreffende Strahlungsintensität einen unteren Schwellwert unterschreitet. Zwischen dem unteren Schwellwert und dem oberen Schwellwert können alle Strahlungssensoren gleichzeitig betrieben werden. Auf diese Weise können die unterschiedlich empfindlichen Empfangskanäle kaskadiert werden. Je nachdem, wie hoch die einfallende Gesamtstrahlung ist, kann/können zum Beispiel nur der empfindliche Kanal, beide Kanäle oder nur der unempfindliche Kanal betrieben werden. Bei Ausführungsformen mit mehr als zwei separaten Strahlungssensoren kann die Steuer- und Auswertungseinheit dazu ausgebildet sein, je nach auftreffender Strahlungsintensität verschiedene Gruppen von Strahlungssensoren zu aktivieren. Weiterhin können auch mehr als zwei Schwellwerte festgelegt sein, die den Gesamt-Arbeitsbereich unterteilen. Die Steuer- und Auswertungseinheit kann hierbei dazu ausgebildet sein, in jedem Teilbereich nur einen der Strahlungssensoren oder nur eine Gruppe von Strahlungssensoren zu aktivieren. Auf diese Weise kann der Arbeitsbereich der optischen Empfangseinheit praktisch unbegrenzt erweitert werden.

Die Steuer- und Auswertungseinheit kann dazu ausgebildet sein, zum Deaktivieren eines Strahlungssensors eine Versorgungsspannung des Strahlungssensors zu verringern oder abzuschalten. Somit ist der Strahlungssensor vor einer Beschädigung durch zu großen Lichteinfall geschützt. Das Reduzieren der Versorgungsspannung kann schrittweise erfolgen.

Gemäß einer weiteren Ausführungsform der Erfindung ist wenigstens einem der separaten Strahlungssensoren ein schaltbarer Verschluss zugeordnet, mit welchem auf den Strahlungssensor gerichtete Strahlung wahlweise blockierbar ist. Dies ermöglicht einen besonders effektiven zusätzlichen Schutz des Strahlungssensors vor überhöhter Einstrahlung. Bei dem Verschluss kann es sich um einen Shutter handeln. Es ist auch möglich, wenigstens einen der separaten Strahlungssensoren mittels einer Flüssiglinse vor zu hohem Lichteinfall zu schützen.

Eine weitere Ausgestaltung der Erfindung sieht vor, dass jeder der separaten Strahlungssensoren der Detektoreinheit als Avalanche-Photodiode (APD), als PIN-Fotodiode (PIN-PD) oder als Single-Photon Avalanche Diode (SPAD) ausgeführt ist. Solche Photodioden sind relativ kostengünstig erhältlich und weisen eine hohe Lichtempfindlichkeit auf. Zudem benötigen sie nur wenig Bauraum, so dass die optische Empfangseinheit besonders kompakt gestaltet werden kann.

Eine spezielle Ausgestaltung der Erfindung sieht vor, dass einer der wenigstens zwei separaten Strahlungssensoren als Avalanche-Photodiode und ein anderer der wenigstens zwei separaten Strahlungssensoren als PIN-Photodiode ausgeführt ist. Die Avalanche-Photodiode kann hierbei einem hochempfindlichen Empfangskanal zugeordnet sein, während die PIN-Photodiode einem geringer empfindlichen Empfangskanal zugeordnet sein kann.

Vorzugsweise ist die Sammeloptik durch eine Einzellinse mit wenigstens zwei unterschiedlich geformten Linsenbereichen gebildet. Beispielsweise kann eine Freiformlinse mit wenigstens zwei unterschiedlich fokussierenden Zonen als Sammeloptik vorgesehen sein. Die Bereitstellung der Sammeloptik als einstückiges Bauteil ermöglicht eine besonders einfache Fertigung.

Die Sammeloptik kann jedoch auch durch eine Anordnung aus wenigstens separaten Linsen gebildet sein. Beispielsweise können zwei unterschiedlich fokussierende Einzellinsen nebeneinander angeordnet sein, vorzugsweise direkt aneinander angrenzend.

Bevorzugt weist die elektronische Steuer- und Auswertungseinheit wenigstens zwei separate Auswertungsschaltungen auf, die jeweils einem der separaten Strahlungssensoren zugeordnet sind. Somit kann auch im Bereich der elektronischen Auswertung des erfassten Lichts eine Anpassung an unterschiedliche Intensitätsverhältnisse erfolgen. Die elektronische Steuer- und Auswertungseinheit kann jedoch auch einen Multiplexer aufweisen, dem jeweilige Signale der wenigstens zwei separaten Strahlungssensoren zugeführt werden, wobei der Multiplexer dazu ausgebildet ist, eines der Signale auszuwählen und der Auswertungsschaltung zuzuführen. Bei dieser Ausgestaltung sind keine separaten Auswertungsschaltungen erforderlich.

Die Erfindung betrifft auch eine optische Datenübertragungsvorrichtung mit einer optischen Sendeeinheit zum Erzeugen eines optischen Strahlungssignals, welches die zu übertragenden Daten repräsentiert, und einer optischen Empfangseinheit zum Empfangen und Auswerten des von der optischen Sendeeinheit erzeugten Strahlungssignals.

Erfindungsgemäß ist die optische Empfangseinheit wie vorstehend beschrieben gestaltet. Eine optische Empfangseinheit mit erweitertem Arbeitsbereich eignet sich in besonderer Weise für eine optische Datenübertragungsvorrichtung, weil bei der optischen Freifeld-Datenübertragung häufig ein großer Bereich von Abständen zwischen Sender und Empfänger abgedeckt sein muss.

Weiterbildungen der Erfindung sind auch den abhängigen Ansprüchen, der nachfolgenden Beschreibung sowie den beigefügten Zeichnungen zu entnehmen.

Die Erfindung wird nachfolgend beispielhaft unter Bezugnahme auf die Zeichnungen beschrieben.
- Fig. 1: zeigt in schematischer Form eine erfindungsgemäße optische Datenübertragungsvorrichtung mit einer erfindungsgemäßen optischen Empfangseinheit.
- Fig. 2: zeigt die Arbeitsbereiche zweier separater Strahlungssensoren einer erfindungsgemäßen optischen Empfangseinheit.

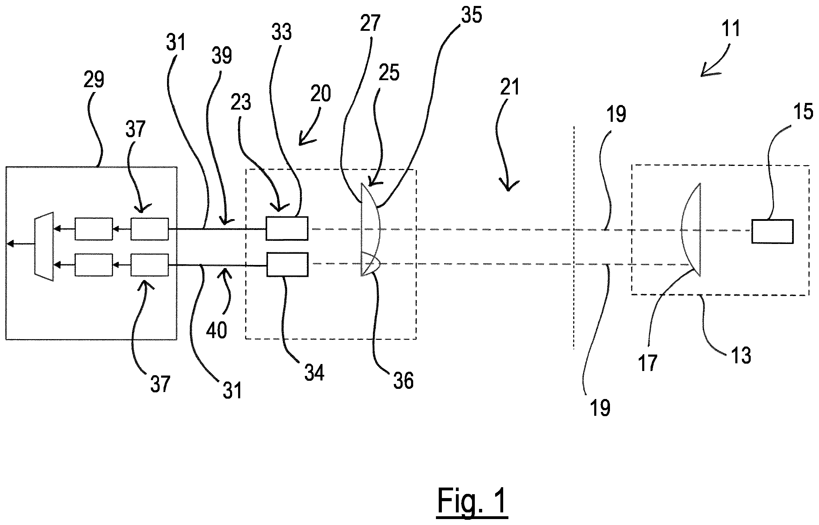

Die in Fig. 1 gezeigte, gemäß einer Ausführungsform der Erfindung gestaltete optische Datenübertragungsvorrichtung 11 umfasst eine optische Sendeeinheit 13, die zum Erzeugen eines optischen Strahlungssignals, welches die zu übertragenden Daten repräsentiert, ausgebildet ist. Bei der optischen Strahlung kann es sich um sichtbares Licht, Infrarotlicht oder Ultraviolettlicht handeln. Die optische Sendeeinheit 13 umfasst in grundsätzlich bekannter Weise eine Lichtquelle 15, beispielsweise eine Leuchtdiode oder eine Laserdiode, sowie eine Kollimationsoptik 17. Eine nicht dargestellte elektronische Steuereinrichtung der optischen Sendeeinheit 13 ist dazu ausgebildet, die Lichtquelle 15 so anzusteuern, dass diese gemäß den zu übertragenden Daten moduliertes Sendelicht ausstrahlt. Das ausgesandte modulierte Licht bildet ein Strahlungssignal 19.

Die optische Datenübertragungsvorrichtung 11 weist ferner eine optische Empfangseinheit 20 auf, die zum Empfangen und Auswerten des Strahlungssignals 19 ausgebildet ist. Zwischen der optischen Sendeeinheit 13 und der optischen Empfangseinheit 20 befindet sich die Übertragungsstrecke 21.

Die optische Empfangseinheit 20 umfasst eine Detektoreinheit 23 zum Erfassen optischer Strahlung sowie eine Sammeloptik 25, die eine Eintrittsfläche 27 definiert. Das gerichtete Licht des Strahlungssignals 19, welches auf die Eintrittsfläche 27 auftrifft, wird von der Sammeloptik 25 in Richtung der Detektoreinheit 23 fokussiert.

Die optische Empfangseinheit 20 weist ferner eine elektronische Steuer- und Auswertungseinrichtung 29 auf, die mit der Detektoreinheit 23 über Signalleitungen 31 in Verbindung steht und dazu ausgebildet ist, basierend auf der von der Detektoreinheit 23 erfassten Strahlung ein Empfangssignal zu erzeugen.

Wie gezeigt weist die Detektoreinheit 23 zwei separate Strahlungssensoren 33, 34 auf, nämlich einen ersten, im Bild oberen Strahlungssensor 33 und einen zweiten, im Bild unteren Strahlungssensor 34. Die beiden Strahlungssensoren 33, 34 können zum Beispiel als Avalanche-Photodioden ausgeführt sein. Eine spezielle Ausgestaltung sieht vor, dass der erste Strahlungssensor 33 als Avalanche-Photodiode ausgeführt ist, während der zweite Strahlungssensor 34 als PIN-Photodiode ausgeführt ist.

Die Sammeloptik 25 ist in zwei verschiedene Bereiche unterteilt, so dass sich zwei separate Zonen 35, 36 der Eintrittsfläche 27 ergeben. Die erste, im Bild obere Zone 35 fokussiert einfallendes Licht ausschließlich in Richtung des ersten Strahlungssensors 33, während die zweite, im Bild untere Zone 36 einfallendes Licht ausschließlich in Richtung des zweiten Strahlungssensors 34 fokussiert. Die Zonen 35, 36 können durch sphärische Linsenbereiche oder durch Zylinderlinsenbereiche gebildet sein. Wie in Fig. 1 erkennbar ist, ist die erste Zone 35 wesentlich größer als die zweite Zone 36. Demgemäß erhält beim Betrieb der optischen Empfangseinheit 20 der erste Strahlungssensor 33 einen beträchtlich größeren Anteil des einfallenden Lichts als der zweite Strahlungssensor 34. Des Weiteren weist der erste Strahlungssensor 33 vorzugsweise eine höhere Strahlungs-Empfindlichkeit auf als der zweite Strahlungssensor 34.

Jedem der Strahlungssensoren 33, 34 ist eine eigene Signalleitung 31 zugeordnet, die jeweils an eine eigene Auswertungsschaltung 37 der Steuer- und Auswertungseinrichtung 29 angeschlossen ist. Jede der Auswertungsschaltungen 37 kann einen Speicherbaustein und einen Verarbeitungsbaustein umfassen, wie dies grundsätzlich bekannt ist. Durch die erste Zone 35, den ersten Strahlungssensor 33, die zugehörige Signalleitung 31 sowie die zugehörige Auswertungsschaltung 37 ist ein erster Empfangskanal 39 gebildet. In entsprechender Weise ist durch die zweite Zone 36, den zweiten Strahlungssensor 34, die zugehörige Signalleitung 31 sowie die zugehörige Auswertungsschaltung 37 ein zweiter Empfangskanal 40 gebildet.

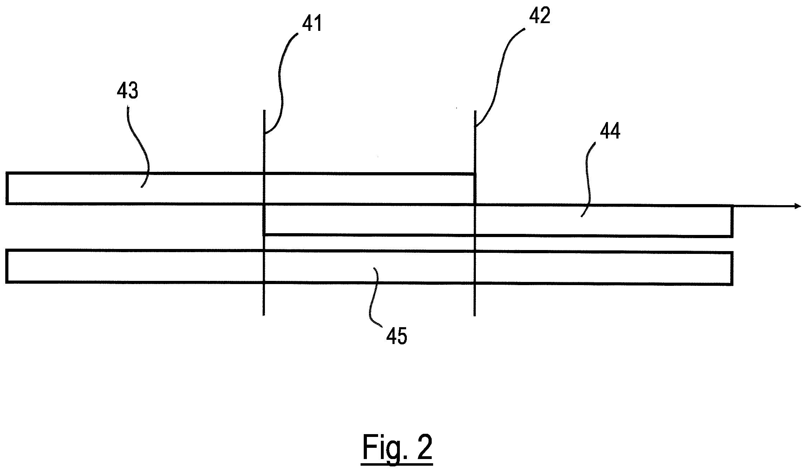

Je nachdem, wie groß die insgesamt auf die Sammeloptik 25 auftreffende Strahlungsleistung ist, erfolgt eine Nutzung nur des ersten Empfangskanals 39, nur des zweiten Empfangskanals 40 oder beider Empfangskanäle 39, 40 parallel. Zu diesem Zweck ist die elektronische Steuer- und Auswertungseinheit 29 dazu ausgebildet, den ersten Strahlungssensor 33 und den zweiten Strahlungssensor 34 in Abhängigkeit von der gesamten Lichtleistung anzusteuern, wie nachfolgend unter zusätzlicher Bezugnahme auf die Fig. 2 näher ausgeführt ist.

In Fig. 2 ist die auf die Eintrittsfläche 27 auftreffende Strahlungsleistung nach rechts aufgetragen. Wenn die Strahlungsleistung einen unteren Schwellwert 41 unterschreitet, wird der zweite Strahlungssensor 34 deaktiviert. In diesem Bereich niedriger Leistung arbeitet nur der hochempfindliche erste Strahlungssensor 33, der einen im Niedrigleistungsbereich gelegenen Arbeitsbereich 43 aufweist und dem die große erste Zone 35 der Sammeloptik 25 zugeordnet ist. Wenn die Strahlungsleistung dagegen einen oberen Schwellwert 42 überschreitet, deaktiviert die Steuer- und Auswertungseinrichtung 29 den ersten Strahlungssensor 33. In diesem Bereich hoher Leistung arbeitet demgemäß ausschließlich der gering empfindliche zweite Strahlungssensor 34, der einen im höheren Leistungsbereich gelegenen Arbeitsbereich 44 aufweist. Wenn die auf die Eintrittsfläche 27 auftreffende Strahlungsintensität den unteren Schwellwert 41 überschreitet und den oberen Schwellwert 42 unterschreitet, aktiviert die Steuer- und Auswertungseinrichtung 29 sowohl den ersten Strahlungssensor 33 als auch den zweiten Strahlungssensor 34. Die Deaktivierung der Strahlungssensoren 33, 34 kann durch Verringern oder Abschalten der Vorspannung erfolgen. Alternativ kann die Deaktivierung eines der Strahlungssensoren 33, 34 auch dadurch erfolgen, dass er durch einen Shutter abgeschirmt wird oder durch eine Flüssiglinse aus dem Fokus gebracht wird.

Dadurch, dass zwei Empfangskanäle 39, 40 mit überlappenden Arbeitsbereichen 43, 44 vorliegen, ist der Arbeitsbereich 45 der optischen Empfangseinheit 20 erweitert. Der hochempfindliche erste Strahlungssensor 33 ist vor einer Übersteuerung oder Beschädigung geschützt.

Bei der dargestellten Ausführungsform ist die Sammeloptik 25 durch eine Einzellinse mit unterschiedlich geformten Linsenbereichen gebildet. Grundsätzlich könnte die Sammeloptik jedoch auch durch eine Anordnung aus wenigstens zwei separaten Linsen gebildet sein.

Gemäß einer nicht dargestellten Ausführungsform der Erfindung sind mehr als zwei Strahlungssensoren vorgesehen, beispielsweise drei, vier oder fünf Strahlungssensoren. Diesen sind jeweilige, unterschiedlich fokussierende Zonen der Sammeloptik 25 zugeordnet. Auf diese Weise kann der Arbeitsbereich 45 einer erfindungsgemäßen optischen Empfangseinheit 20 in praktisch beliebiger Weise erweitert werden.

### Bezugszeichenliste

- 11: optische Datenübertragungsvorrichtung
- 13: optische Sendeeinheit
- 15: Lichtquelle
- 17: Kollimationsoptik
- 19: Strahlungssignal
- 20: optische Empfangseinheit
- 21: Übertragungsstrecke
- 23: Detektoreinheit
- 25: Sammeloptik
- 27: Eintrittsfläche
- 29: Steuer- und Auswertungseinheit
- 31: Signalleitung
- 33: erster Strahlungssensor
- 34: zweiter Strahlungssensor
- 35: erste Zone
- 36: zweite Zone
- 37: Auswertungsschaltung
- 39: erster Empfangskanal
- 40: zweiter Empfangskanal
- 41: unterer Schwellwert
- 42: oberer Schwellwert
- 43: Arbeitsbereich des ersten Empfangskanals
- 44: Arbeitsbereich des zweiten Empfangskanals
- 45: Arbeitsbereich der optischen Empfangseinheit

## Patentansprüche

1. Optische Empfangseinheit (20) mit
einer Detektoreinheit (23) zum Erfassen optischer Strahlung,
einer elektronischen Steuer- und Auswertungseinheit (29), die mit der Detektoreinheit (23) in Verbindung steht und dazu ausgebildet ist, basierend auf der von der Detektoreinheit (23) erfassten Strahlung wenigstens ein Empfangssignal zu erzeugen, und
einer Sammeloptik (25), die eine Eintrittsfläche (27) definiert und dazu ausgebildet und angeordnet ist, auf die Eintrittsfläche (27) auftreffende optische Strahlung in Richtung der Detektoreinheit (23) zu fokussieren, wobei
die Detektoreinheit (23) wenigstens zwei separate Strahlungssensoren (33, 34) umfasst und die Eintrittsfläche (27) der Sammeloptik (25) wenigstens zwei separate Zonen (35, 36) aufweist, wobei jede der separaten Zonen (35, 36) dazu ausgebildet ist, die auf sie auftreffende optische Strahlung lediglich in Richtung eines der separaten Strahlungssensoren (33, 34) zu fokussieren, und wobei
die Steuer- und Auswertungseinheit (29) dazu ausgebildet ist, einen der separaten Strahlungssensoren (33, 34) teilweise oder vollständig zu deaktivieren, wenn die auf die Eintrittsfläche (27) auftreffende Strahlungsintensität einen oberen Schwellwert (42) überschreitet oder einen unteren Schwellwert (41) unterschreitet,
**dadurch gekennzeichnet,**
**dass** die separaten Zonen (35, 36) der Eintrittsfläche (27) unterschiedlich groß sind.

2. Optische Empfangseinheit nach Anspruch 1,
**dadurch gekennzeichnet,**
**dass** die separaten Strahlungssensoren (33, 34) der Detektoreinheit (23) unterschiedliche Strahlungs-Empfindlichkeiten aufweisen.

3. Optische Empfangseinheit nach einem der vorstehenden Ansprüche,
**dadurch gekennzeichnet,**
**dass** die Steuer- und Auswertungseinheit (29) dazu ausgebildet ist, in Abhängigkeit von der auf die Eintrittsfläche (27) auftreffenden Strahlungsintensität entweder nur das Ausgangssignal eines der separaten Strahlungssensoren (33, 34) oder Ausgangssignale aller separaten Strahlungssensoren (33, 34) auszuwerten.

4. Optische Empfangseinheit nach einem der vorstehenden Ansprüche,
**dadurch gekennzeichnet,**
**dass** die Steuer- und Auswertungseinheit (29) dazu ausgebildet ist, nur einen der separaten Strahlungssensoren (33) teilweise oder vollständig zu deaktivieren, wenn die auf die Eintrittsfläche (27) auftreffende Strahlungsintensität einen oberen Schwellwert (42) überschreitet und nur den anderen der separaten Strahlungssensoren (34) teilweise oder vollständig zu deaktivieren, wenn die auf die Eintrittsfläche auftreffende Strahlungsintensität einen unteren Schwellwert (41) unterschreitet.

5. Optische Empfangseinheit nach einem der vorstehenden Ansprüche,
**dadurch gekennzeichnet,**
**dass** die Steuer- und Auswertungseinheit (29) dazu ausgebildet ist, zum Deaktivieren eines Strahlungssensors (33, 34) eine Versorgungsspannung des Strahlungssensors (33, 34) zu verringern oder abzuschalten.

6. Optische Empfangseinheit nach einem der vorstehenden Ansprüche,
**dadurch gekennzeichnet,**
**dass** wenigstens einem der separaten Strahlungssensoren (33, 34) ein schaltbarer Verschluss zugeordnet ist, mit welchem auf den Strahlungssensor gerichtete Strahlung wahlweise blockierbar ist.

7. Optische Empfangseinheit nach einem der vorstehenden Ansprüche,
**dadurch gekennzeichnet,**
**dass** jeder der separaten Strahlungssensoren (33, 34) der Detektoreinheit (23) als Avalanche-Photodiode (APD), als PIN-Photodiode (PIN-PD) oder als Single-Photon Avalanche Diode (SPAD) ausgeführt ist.

8. Optische Empfangseinheit nach einem der vorstehenden Ansprüche,
**dadurch gekennzeichnet,**
**dass** einer der wenigstens zwei separaten Strahlungssensoren (33) als Avalanche-Photodiode (APD) und ein anderer der wenigstens zwei separaten Strahlungssensoren (34) als PIN-Photodiode (PIN-PD) ausgeführt ist.

9. Optische Empfangseinheit nach einem der vorstehenden Ansprüche,
**dadurch gekennzeichnet,**
**dass** die Sammeloptik (25) durch eine Einzellinse mit wenigstens zwei unterschiedlich geformten Linsenbereichen gebildet ist.

10. Optische Empfangseinheit nach einem der Ansprüche 1 bis 8,
**dadurch gekennzeichnet,**
**dass** die Sammeloptik (25) durch eine Anordnung aus wenigstens zwei separaten Linsen gebildet ist.

11. Optische Empfangseinheit nach einem der vorstehenden Ansprüche,
**dadurch gekennzeichnet,**
**dass** die elektronische Steuer- und Auswertungseinheit (29) wenigstens zwei separate Auswertungsschaltungen (37) aufweist, die jeweils einem der separaten Strahlungssensoren (33, 34) zugeordnet sind.

12. Optische Datenübertragungsvorrichtung (11)
mit einer optischen Sendeeinheit (13) zum Erzeugen eines optischen Strahlungssignals, welches die zu übertragenden Daten repräsentiert, und einer optischen Empfangseinheit (20) zum Empfangen und Auswerten des von der optischen Sendeeinheit (13) erzeugten Strahlungssignals,
**dadurch gekennzeichnet,**
**dass** die optische Empfangseinheit (20) nach einem der vorstehenden Ansprüche gestaltet ist.

## Claims

1. An optical reception unit (20) comprising
a detector unit (23) for detecting optical radiation;
an electronic control and evaluation unit (29) which is connected to the detector unit (23) and which is configured to generate at least one reception signal based on the radiation detected by the detector unit (23), and
a converging optics (25) which defines an entry surface (27) and which is configured and arranged to focus optical radiation impinging on the entry surface (27) in the direction of the detector unit (23), wherein
the detector unit (23) comprises at least two separate radiation sensors (33, 34) and the entry surface (27) of the converging optics (25) has at least two separate zones (35, 36), wherein each of the separate zones (35, 36) is configured to focus the optical radiation impinging on it only in the direction of one of the separate radiation sensors (33, 34), and wherein
the control and evaluation unit (29) is configured to partly or completely deactivate one of the separate radiation sensors (33, 34) if the radiation intensity impinging on the entry surface (27) exceeds an upper threshold value (42) or falls below a lower threshold value (41), **characterized in that**
the separate zones (35, 36) of the entry surface (27) are of different sizes.

2. An optical reception unit according to claim 1,
**characterized in that**
the separate radiation sensors (33, 34) of the detector unit (23) have different radiation sensitivities.

3. An optical reception unit according to one of the preceding claims,
**characterized in that**
the control and evaluation unit (29) is configured to evaluate either only the output signal of one of the separate radiation sensors (33, 34) or output signals of all the separate radiation sensors (33, 34) in dependence on the radiation intensity impinging on the entry surface (27).

4. An optical reception unit according to any one of the preceding claims,
**characterized in that**
the control and evaluation unit (29) is configured to partly or completely deactivate only one of the separate radiation sensors (33) if the radiation intensity impinging on the entry surface (27) exceeds an upper threshold value (42) and to partly or completely deactivate only the other one of the separate radiation sensors (34) if the radiation intensity impinging on the entry surface falls below a lower threshold value (41).

5. An optical reception unit according to any one of the preceding claims,
**characterized in that**
the control and evaluation unit (29) is configured to reduce or switch off a supply voltage of the radiation sensor (33, 34) in order to deactivate a radiation sensor (33, 34).

6. An optical reception unit according to any one of the preceding claims,
**characterized in that**
at least one of the separate radiation sensors (33, 34) is assigned a switchable shutter with which radiation directed to the radiation sensor can be selectively blocked.

7. An optical reception unit according to any one of the preceding claims,
**characterized in that**
each of the separate radiation sensors (33, 34) of the detector unit (23) is designed as an avalanche photodiode (APD), as a PIN photodiode (PIN-PD) or as a single-photon avalanche diode (SPAD).

8. An optical reception unit according to any one of the preceding claims,
**characterized in that**
one of the at least two separate radiation sensors (33) is designed as an avalanche photodiode (APD) and another one of the at least two separate radiation sensors (34) is designed as a PIN photodiode (PIN-PD).

9. An optical reception unit according to any one of the preceding claims,
**characterized in that**
the converging optics (25) is formed by a single lens comprising at least two differently shaped lens regions.

10. An optical reception unit according to any one of the claims 1 to 8,
**characterized in that**
the converging optics (25) is formed by an arrangement of at least two separate lenses.

11. An optical reception unit according to any one of the preceding claims,
**characterized in that**
the electronic control and evaluation unit (29) has at least two separate evaluation circuits (37), each of which is assigned to one of the separate radiation sensors (33, 34).

12. An optical data transmission apparatus (11)
comprising an optical transmission unit (13) for generating an optical radiation signal, which represents the data to be transmitted, and an optical reception unit (20) for receiving and evaluating the radiation signal generated by the optical transmission unit (13),
**characterized in that**
the optical reception unit (20) is designed according to any one of the preceding claims.

## Revendications

1. Unité de réception optique (20), comprenant :
une unité de détection (23) destinée à détecter un rayonnement optique, une unité électronique de commande et d'évaluation (29) qui est en communication avec l'unité de détection (23) et est conçue pour générer au moins un signal de réception en se basant sur le rayonnement détecté par l'unité de détection (23), et
une optique convergente (25) qui définit une surface d'entrée (27) et est conçue et agencée pour focaliser le rayonnement optique, incident sur la surface d'entrée (27), en direction de l'unité de détection (23),
dans laquelle
l'unité de détection (23) comprend au moins deux capteurs de rayonnement séparés (33, 34), et la surface d'entrée (27) de l'optique convergente (25) présente au moins deux zones séparées (35, 36), chacune des zones séparées (35, 36) étant conçue pour focaliser le rayonnement optique, incident sur celle-ci, uniquement en direction de l'un des capteurs de rayonnement séparés (33, 34), et
l'unité de commande et d'évaluation (29) est conçue pour désactiver partiellement ou totalement l'un des capteurs de rayonnement séparés (33, 34) lorsque l'intensité du rayonnement incident sur la surface d'entrée (27) est supérieure à une valeur seuil supérieure (42) ou inférieure à une valeur seuil inférieure (41),
**caractérisée en ce que**
les zones séparées (35, 36) de la surface d'entrée (27) sont de tailles différentes.

2. Unité de réception optique selon la revendication 1,
**caractérisée en ce que**
les capteurs de rayonnement séparés (33, 34) de l'unité de détection (23) présentent des sensibilités au rayonnement différentes.

3. Unité de réception optique selon l'une des revendications précédentes,
**caractérisée en ce que**
l'unité de commande et d'évaluation (29) est conçue pour évaluer, en fonction de l'intensité du rayonnement incident sur la surface d'entrée (27), soit le signal de sortie de l'un seulement des capteurs de rayonnement séparés (33, 34), soit les signaux de sortie de tous les capteurs de rayonnement séparés (33, 34).

4. Unité de réception optique selon l'une des revendications précédentes,
**caractérisée en ce que**
l'unité de commande et d'évaluation (29) est conçue pour désactiver partiellement ou totalement uniquement l'un des capteurs de rayonnement séparés (33) lorsque l'intensité du rayonnement incident sur la surface d'entrée (27) est supérieure à une valeur seuil supérieure (42), et pour désactiver partiellement ou totalement uniquement l'autre des capteurs de rayonnement séparés (34) lorsque l'intensité du rayonnement incident sur la surface d'entrée est inférieure à une valeur seuil inférieure (41).

5. Unité de réception optique selon l'une des revendications précédentes,
**caractérisée en ce que**
afin de désactiver un capteur de rayonnement (33, 34), l'unité de commande et d'évaluation (29) est conçue pour réduire ou couper une tension d'alimentation du capteur de rayonnement (33, 34).

6. Unité de réception optique selon l'une des revendications précédentes,
**caractérisée en ce que**
un obturateur commutable est associé à l'un au moins des capteurs de rayonnement séparés (33, 34), permettant de bloquer sélectivement le rayonnement dirigé vers le capteur de rayonnement.

7. Unité de réception optique selon l'une des revendications précédentes,
**caractérisée en ce que**
chacun des capteurs de rayonnement séparés (33, 34) de l'unité de détection (23) est réalisé sous forme de photodiode à avalanche (APD), de photodiode PIN (PIN-PD) ou de diode à avalanche à photon unique (SPAD).

8. Unité de réception optique selon l'une des revendications précédentes,
**caractérisée en ce que**
l'un desdits au moins deux capteurs de rayonnement séparés (33) est réalisé sous forme de photodiode à avalanche (APD) et un autre desdits au moins deux capteurs de rayonnement séparés (34) est réalisé sous forme de photodiode PIN (PIN-PD).

9. Unité de réception optique selon l'une des revendications précédentes,
**caractérisée en ce que**
l'optique convergente (25) est formée par une lentille unique ayant au moins deux zones de lentilles de formes différentes.

10. Unité de réception optique selon l'une des revendications 1 à 8,
**caractérisée en ce que**
l'optique convergente (25) est formée par un ensemble d'au moins deux lentilles séparées.

11. Unité de réception optique selon l'une des revendications précédentes,
**caractérisée en ce que**
l'unité électronique de commande et d'évaluation (29) comprend au moins deux circuits d'évaluation séparés (37) qui sont associés chacun à l'un des capteurs de rayonnement séparés (33, 34).

12. Dispositif optique de transmission de données (11),
comprenant une unité d'émission optique (13) destinée à générer un signal de rayonnement optique qui représente les données à transmettre, et une unité de réception optique (20) destinée à recevoir et à évaluer le signal de rayonnement généré par l'unité d'émission optique (13),
**caractérisé en ce que**
l'unité de réception optique (20) est conçue selon l'une des revendications précédentes.
